## Europäisches Patentamt

## European Patent Office

## Office européen des brevets

(19)

(11) Veröffentlichungsnummer: **0 211 986**
**B1**

(12)    **EUROPÄISCHE PATENTSCHRIFT**

(45) Veröffentlichungstag der Patentschrift:
21.06.89

(51) Int. Cl.⁴: **A23D 3/00, A23D 3/02**

(21) Anmeldenummer: 85110512.2

(22) Anmeldetag: 21.08.85

(54) Verfahren zur Herstellung einer kalorienarmen Aufstrichmasse mit hohem Proteingehalt.

(43) Veröffentlichungstag der Anmeldung:
04.03.87 Patentblatt 87/10

(45) Bekanntmachung des Hinweises auf die Patenterteilung:
21.06.89 Patentblatt 89/25

(84) Benannte Vertragsstaaten:
DE

(56) Entgegenhaltungen:
EP-A- 0 101 105
EP-A- 0 139 398
US-A- 4 425 370

(73) Patentinhaber: Walter Rau Lebensmittelwerke GmbH &
Co. KG, D-4517 Hilter 1(DE)

(72) Erfinder: Frank, Heinz, Dr. rer. nat., Hagenberg 78,
D-4505 Bad Iburg(DE)
Erfinder: Bölsche, Uwe, Dr. rer. nat., Stodieckshof 59,
D-4802 Halle/Westf.(DE)

(74) Vertreter: Sandmair, Kurt, Dr. et al, Patentanwälte
Schwabe, Sandmair, Marx Stuntzstrasse 16,
D-8000 München 80(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung einer kalorienarmen, an Protein und mehrfach ungesättigten Fettsäuren reichen Aufstrichmasse des Wasser-in-Öl-Emulsions-Typs.

Aufgrund der heutigen Kenntnisse eines guten Teils der Verbraucher über die ernährungsphysiologischen Nachteile der herkömmlichen Aufstrichmassen, wobei insbesonders der niedrige Proteingehalt, ihr relativ niedriger Gehalt an mehrfach ungesättigten Fettsäuren und/oder ihr hoher Fettgehalt zu nennen sind, besteht ein anhaltendes Bedürfnis nach solchen Aufstrichmassen, die geschmacklich mit den bekannten Produkten übereinstimmen, ohne jedoch deren Nachteile aufzuweisen. Im besonderen werden Aufstrichmassen verlangt, die einen niedrigen Fettgehalt, einen hohen Proteingehalt und außerdem eine hohe Konzentration an mehrfach ungesättigten Fettsäuren aufweisen. Diese Aufstrichmassen sollen im Aussehen, im Geschmack und in ihrer Verwendbarkeit den herkömmlichen Aufstrichmassen vergleichbar sein.

Aus der DE-OS 3 138 695 ist ein Verfahren zur Herstellung einer kalorienarmen Aufstrichmasse bekannt, bei dem in der wäßrigen Phase eine Proteinkonzentration von 0,1–2 Gew.-% verwendet wird. Der Nachteil dieses Verfahrens besteht darin, daß zur Herstellung einer Wasser-in-Öl-Emulsion einmal eine flüssige Fettphase und zum anderen eine proteinhaltige wäßrige Phase als Ausgangsmaterial benötigt werden. Bekanntlich läßt sich jedoch Protein in einer wäßrigen Phase nur bis zu einer bestimmten Obergrenze der Konzentration lösen. Bei höheren Konzentrationen erhält man hochviskose Lösungen, die ein Weiterverarbeiten aufgrund ihrer hohen Viskosität unmöglich machen. Zudem ist für die vollständige Lösung von Proteinen in Wasser, insbesondere bei höheren Konzentrationen, ein relativ langer Zeitraum erforderlich, der vor allem wegen der mikrobiologischen Belastung nachteilig ist. Bei diesem Verfahren wird in einem weiteren Verfahrensschritt zunächst eine Öl-in-Wasser-Emulsion hergestellt, die anschließend durch ein Phasenumkehr in die gewünschte stabile Wasser-in-Öl-Emulsion überführt werden muß.

Aus der DE-PS 2 850 494 ist ein weiteres Verfahren zur Herstellung einer Aufstrichmasse bekannt, bei dem als Protein Magermilch zur Herstellung der wässrigen Proteinlösung verwendet wird. Die Verwendung von Magermilch, wobei im weiteren Verfahren das Protein zunächst durch eine Säurefällung ausgefällt und anschließend zur Herstellung der wässrigen Phase wieder aufgelöst wird, bedingt eine Reihe von Nachteilen, insbesonders wiederum die mikrobiologische Belastung des Verfahrens, die auf Grund des zeitaufwendigen Prozesses besonders nachteilig ins Gewicht fällt.

Um ein mikrobiologisch einwandfreies Endprodukt zu erhalten, wird deshalb bei diesem Verfahren die Magermilch sowie die proteinhaltige Lösung einer mehr oder weniger langen Hitzebehandlung unterworfen, die im weiteren Herstellungsprozeß zur Ausfällung des Proteins Anlaß geben kann und damit nicht unerhebliche Produktionsnachteile mit sich bringt. Durch die Verwendung von Magermilch als Rohmaterial unterliegt das Herstellungsverfahren und das Endprodukt jahreszeitlichen Schwankungen in Abhängigkeit von der zur Verfügung stehenden Qualität der Magermilch.

Darüber hinaus besitzen beide Verfahren den wesentlichen Nachteil, daß entweder die Emulsion bzw. die Wasserphase gegenüber thermischen Belastungen sehr empfindlich ist. Aus diesem Grund kommt es bei Betriebsstörungen im Produktionsablauf, als deren Folge ein nochmaliges Bearbeiten, d. h. Erhitzen und Abkühlen der bereits abgekühlten Emulsion notwendig wird, häufig zu Karamelisierungen, Braunverfärbungen, Klumpenbildung und Geschmacksveränderungen in der Emulsion. Dieses Verhalten der Emulsionen (auch als Reworkverhalten bezeichnet) bedeutet einen erheblichen wirtschaftlichen Nachteil, da der nicht mehr verwendbare Teil der Emulsion vernichtet werden muß.

Unter "kalorienarmer Aufstrichmasse" wird in dieser Beschreibung eine Wasser-in-Öl-Emulsion verstanden, deren Fettgehalt im Bereich von 25–50 %, also niedriger als der von üblicher Margarine ist, der bei etwa 80 % liegt.

Aufgabe der vorliegenden Erfindung ist es, ein Verfahren zur Herstellung einer kalorienarmen, proteinreichen und reich an mehrfach ungesättigten Fettsäuren zur Verfügung zu stellen, das die Nachteile der bekannten Verfahren nicht aufweist.

Es wurde nun überraschend gefunden, daß diese Aufgabe dadurch erreicht werden kann, indem man entgegen den bekannten Verfahren das Protein nicht in der Wasserphase, sondern in der Fettphase dispergiert und anschließend die Protein-Fett-Dispersion direkt in die Wasserphase einemulgiert, wobei man sofort die für ein stabiles Endprodukt erforderliche Wasser-in-Öl-Emulsion erhält.

Die Erfindung betrifft deshalb auch ein Verfahren zur Herstellung einer Wasser-in-Öl-Emulsion durch getrenntes Herstellen einer Protein-Fett-Dispersion, die gegebenenfalls weitere Zusätze enthält und einer wäßrigen Phase, die übliche Zusätze, wie pH-Stabilisatoren, Salze, Konservierungsmittel und Aromastoffe enthält, anschließendes Emulgieren der Fett-Protein-Dispersion in einem Konzentrationsbereich von 25–50 % Fettgehalt in der Emulsion, berechnet als Fettgehalt in der gesamten Emulsion in der wäßrigen Phase sowie Durchführung eines Pasteurisierungsschrittes, Abkühlen, Abfüllen und Abpacken der Aufstrichmasse.

Durch das erfindungsgemäße Dispergieren des Proteins in der Fettphase können bis zu 60 Gew.-% Protein dispergiert werden. Darüber hinaus werden die bei wässrigen Proteinlösungen nachteiligen mikrobiologischen Probleme der proteinhaltigen Wasserphase vermieden, da die Dispersion des Proteins in der Fettphase im allgemeinen zeitunabhängig erfolgen kann. Da beim erfindungsgemäßen Verfahren anstelle der Rohmilch Proteine in trockener Form verwendet werden können, wird das Herstellungsverfahren zeitlich abgekürzt, was sowohl in mikrobiologischer als auch wirtschaftlicher Hinsicht wesentliche Vorteile bringt. Da weiterhin zur Herstellung der Wasser-in-Öl-Emulsion die Fettphase in die Wasserphase eingebracht wird, erhält man bereits in diesem Verfahrensschritt den für ein lagerfähiges Endprodukt erforderlichen Emulsionstyp. Dadurch wird es möglich, den verfahrenstechnisch nachteiligen Phasenumkehrschritt im Produktionsprozeß zu vermeiden.

Durch das erfindungsgemäße Verfahren wird es außerdem möglich, eine Aufstrichmasse mit einem Proteingehalt von z. B. 30 Gew.-% und einem niedrigen Fettgehalt von z. B. 25 Gew.-% herzustellen.

Ein weiterer Vorteil des erfindungsgemäßen Verfahrens besteht darin, daß - gerade bei hohen Eiweißgehalten im Produkt - die Fettkomposition in weiten Grenzen variiert werden kann. Auch relativ hohe Konzentrationen bis zu 40 Gew.-% mehrfach ungesättigter Fettsäuren können in die Aufstrichmasse eingebracht werden, ohne daß Einbußen hinsichtlich der Konsistenz und Stabilität hingenommen werden müssen.

Durch das Dispergieren von Eiweiß in die Fettphase ergeben sich keine Probleme bezüglich einer längeren Lagerung bei erhöhter Temperatur und in gleicher Weise werden beim erfindungsgemäßen Verfahren die wirtschaftlich nachteiligen Rework-Probleme beseitigt. Auf Stabilisierungs mittel wie Gelatine und andere, die bei herkömmlichen Verfahren für ein stabile Lagerform der fertigen Aufstrichmasse notwendig sind, kann deshalb verzichtet werden.

Als Proteine werden beim erfindungsgemäßen Verfahren alle herkömmlichen Proteine in trockener Pulverform, insbesondere Caseine, Caseinate, Buttermilchpulver und Molkenproteine verwendet. Für die Fettphase werden die zur Herstellung von kalorienarmen Aufstrichmassen üblichen Fettmischungen, wie z. B. auf Basis Sojaöl, Sonnenblumenöl, Kokosöl und andere Pflanzenöle verwendet.

Anschließend wird das erfindungsgemäße Verfahren näher beschrieben.

Fettphase


Stufe 1


Eine Fettphase wird in an sich bekannter Weise aus Ölen und/oder Fetten hergestellt. Die Öle können beispielsweise Butteröl, Sojaöl, Sonnenblumenöl, andere Pflanzenöle sowie gehärtete und/oder umgeesterte Produkte auf Basis dieser Rohwaren sein. Zu der Fettphase oder Teilen davon können öllösliche Zusätze gegeben werden, wie z. B. natürliche Farbstoffe und Vitamine.

Die Herstellung der Fettphase erfolgt bei einer Temperatur zwischen 35 und 80 °C.

Stufe 2

Die auf diese Weise hergestellte Fettphase wird auf eine Temperatur von 60 bis 70 °C, vorzugsweise 65 °C erwärmt und das gewünschte Protein als Trockensubstanz in einer Konzentration von 0,5 - 60 Gew.-%, vorzugsweise in einer Konzentration zwischen 20 und 30 Gew.-% unter Rühren dispergiert. Nachdem das gesamte Protein dispergiert ist, wird die Fett-Protein-Dispersion bei einer Temperatur von 60 - 70 °C, vorzugsweise 65 °C zur Herstellung der Voremulsion gehalten.

Wässrige Phase


Stufe 3

In eine auf 65 - 75 °C, vorzugsweise 70 °C, erwärmte wässrige Phase werden die wasserlöslichen Bestandteile, wie Citrate und Phosphate sowie andere übliche Zusätze eingebracht. Die Wasserphase wird bei einer Temperatur von 65 - 75 °C, vorzugsweise 70 °C zur Herstellung der Vor-Emulsion gehalten.

Emulgierung


Stufe 4

In dieser Stufe wird die Emulsion durch Zugeben der Fett-Protein-Dispersion mit einer Temperatur von 65 °C in die Wasserphase mit einer Temperatur von 70 °C hergestellt. Dabei wird die Fett-Protein-Dispersion nach Einbringen in die Wasserphase in der gewünschten Konzentration zunächst 10 Minuten bei 65 °C gerührt, anschließend erfolgt die Emulgatorzugabe und die Emulsion wird für weitere 10 Minuten bei einer Temperatur zwischen 60 und 70 °C, vorzugsweise 65 °C, gerührt. Der Fettgehalt der Emulsion wird durch den Anteil der Fettphase in der Wasserphase kontrolliert, wobei die Anteile so gewählt werden, daß ein Fettgehalt zwischen 25 und 50 % erhalten wird.

Stufe 5

Nach der Emulgierung wird das Produkt auf 75 - 85 °C, vorzugsweise auf 80 °C, für 20 bis 60 Sekunden erhitzt um die Emulsion zu pasteurisieren und anschließend auf 8 - 12 °C, vorzugsweise auf 10 °C abgekühlt. Das gekühlte Produkt wird verpackt, auf herkömmliche Weise luftdicht versiegelt und gelagert.

Erfindungsgemäß wird also eine kalorienarme Aufstrichmasse mit einem Proteingehalt bis zu 30 % des Wasser-in-Öl-Emulsions-Typs erhalten. Das Protein wird hierfür in der Fettphase in einer Konzentration von 0,5 - 60 % bei einer Temperatur von 60 - 70 °C dispergiert, um eine Wasser-in-Öl-Emulsion zu erhalten, die eine Fettphase von 25 bis 50 % und ein wässrige Phase von 75 bis 50 % enthält. Das zum Dispergieren in der Fettphase verwendete Protein besteht aus Natriumcaseinat und/oder anderen Caseinaten, Molkenproteinen, Buttermilchpulver, Casein oder gegebenenfalls Mischungen dieser Substanzen.

Eine unabhängig von der Fettphase hergestellte Wasserphase wird auf eine Temperatur von 65 bis 75 °C, vorzugsweise 70 °C, erwärmt und bei dieser Temperatur bis zur Emulgierung gehalten. In der folgenden Verfahrensstufe der Emulgierung wird bei einer Temperatur von 60 bis 70 °C, vorzugsweise 65 °C, die Fettphase mit dem dispergierten Protein in die Wasserphase eingebracht, gerührt, anschließend Emulgator zugegeben und für einen weiteren Zeitraum von 10 bis 20 Minuten gerührt. Anschließend wird die Emulsion zur Kristallisation auf 8 bis 12 °C, vorzugsweise 10 °C abgekühlt, anschließend verpackt und gelagert.

Zur besseren Übersicht ist das erfindungsgemäße Verfahren nochmals in Abb. 1 als Blockschema dargestellt.

Eine Vergleichsanalyse der Zusammensetzung des mit dem erfindungsgemäßen Verfahren hergestellte Produktes mit einem Handelsprodukt ergab folgende Werte:

|  | Erfindungsgemäßes Produkt | Handelsprodukt |
|---|---|---|
| Fett: | 39,5% | 39,0% |
| Wasser: | 46,0% | 48,0% |
| Protein: | 9,8% | 6,5% |
| Kochsalz: | 1,4% | 1,3% |
| Laktose: | 1,0% | 2,0% |
| Mehrfach ungesättigte Fettsäuren: | 50,0% | 30,0% |
| Weitere Bestandteile (Emulgatoren, Farbstoffe etc.): | 3,3% | 3,2% |

Beispiel 1:

Man stellt eine Fettphase, bestehend aus 4,5 kg Sonnenblumenöl, 2,5 kg Sojafett und 1,0 kg Kokosfett her. In die auf 65 °C erwärmte Fettphase dispergiert man 0,6 kg Natriumcaseinat und 1,0 kg Buttermilchpulver. Unabhängig davon stellt man eine wässrige Phase aus 9,5 kg Wasser, die man auf 70 °C erwärmt, und mit üblichen Bestandteilen, wie Kochsalz, Säureregulatoren, Aromastoffen und Konservierungsmitteln versetzt, her. Nach Aufbereitung der Fett-Protein-Dispersion wird diese unter Rühren zur Wasserphase gegeben und 10 Minuten bei 65 °C gerührt. Anschließend gibt man 0,2 kg Monoglycerid zu und rührt für weitere 10 Minuten bei 65 °C. Dann wird das Produkt auf 50 bis 60 °C, vorzugsweise 55 °C abgekühlt und in die Anlage eingeführt. Nach einer Pasteurisierung bei 80 °C für 25 Sekunden kühlt man auf 8 - 12 °C ab; die anschließende Verpackung erfolgt mit herkömmlichen Mitteln.

Beispiel 2:

Man stellt eine Fettphase aus 2 kg Sonnenblumenöl, 1,5 kg Butterfett und 4,4 kg Sojafett her. In die auf 65 °C erwärmte Fettphase bringt man 0,5 kg Kalziumcaseinat, 0,1 kg Molkenprotein, 0,2 kg Buttermilchpulver und 0,4 kg Casein ein. Unabhängig davon stellt man eine auf 70 °C erwärmte Wasserphase, bestehend aus 10 kg Wasser sowie den üblichen Zutaten, wie Schmelzsalze, Säureregulatoren, Konservierungsmittel, Aromen und Kochsalz her. Nach Aufbereitung der Fett-Protein-Dispersion wird diese unter Rühren zur Wasserphase gegeben und 10 Minuten bei 65 °C konditioniert. Anschließend erfolgt die Zugabe von 0,2 kg Monoglycerid und eine weitere Mischung für 10 Minuten bei 65 °C. Nach Abkühlung auf 55 °C wird die Emulsion in die Anlage eingeführt. Die Pasteurisierung erfolgt mittels Plattenaustauscher bei 80 °C für 20 bis 60 Sekunden. Nach der Pasteurisierung wird das Produkt auf 8 bis 12 °C abgekühlt und verpackt.

**Abb. 1**

Blockschema des erfindungsgemäßen Herstellungsverfahrens für kalorienarme Aufstrichmassen

Fettphase:                                          Wässrige Phase:

```
┌─────────────────────────┐
│  Erwärmen der Fettphase  │
│       auf 65 °C          │
└─────────────────────────┘
           │
┌─────────────────────────┐     ┌──────────────────────────────┐
│ Dispersion des Proteins  │     │ Erwärmen der Wasserphase     │
│      bei 65 °C           │     │ auf 70 °C;                   │
└─────────────────────────┘     │ Lösen der üblichen Bestand-  │
           ╲                    │ teile                        │
            ╲                   └──────────────────────────────┘
             ↘                           ╱
         ┌──────────────────────────────┐
         │ Einemulgierung der Fettphase │
         │ in die Wasserphase bei 65 °C;│
         │ Rühren für 10 Minuten        │
         └──────────────────────────────┘
                      │
         ┌──────────────────────────────┐
         │ Zugabe des Emulsionsmittels; │
         │ Rühren für 10 Minuten bei 65 °C │
         └──────────────────────────────┘
                      │
         ┌──────────────────────────────┐
         │ Pasteurisieren               │
         │ 80 °C, 20 - 60 Sekunden      │
         └──────────────────────────────┘
                      │
         ┌──────────────────────────────┐
         │ Abkühlen unter Kneten,       │
         │ Verpacken                    │
         └──────────────────────────────┘
```

## Patentansprüche

1. Verfahren zur Herstellung einer kalorienarmen Aufstrichmasse des Wasser-in-Öl-Emulsions-Typs mit hohem Proteingehalt, durch getrenntes Herstellen einer wäßrigen Phase und einer aus Ölen und/oder Fetten und gegebenenfalls weiteren üblichen Zusätzen bestehenden Fettphase, dadurch gekennzeichnet, daß man
a) in einer auf 35 bis 80 °C erwärmten Fettphase Protein(e) dispergiert;
b) diese Fettprotein-Dispersion in eine auf 55 bis 80 °C erwärmte Wasserphase einemulgiert, rührt,
c) den Emulgator zugibt und nochmals bei 50 bis 80 °C rührt, nach an sich bekannten Verfahren die Emulsion pasteurisiert und auf an sich bekannte Weise im Kratzkühler abkühlt nach einem Pasteurisierungsschritt bei 75 °C bis 85 °C.
2. Verfahren nach Anspruch 1, dadurch gekennzeichnet, daß die Temperatur
in Stufe a) 60 - 70 °C,
in Stufe b) 65 - 70 °C,
in Stufe c) 65 - 70 °C und
die Endtemperatur 5 - 15 °C beträgt.
3. Verfahren nach Anspruch 1 bis 2, dadurch gekennzeichnet, daß das zur Dispergierung verwendete Protein Buttermilchpulver und/oder Caseinate oder Casein und/oder Molkenproteine sowie ihre Mischungen ist.
4. Verfahren nach Anspruch 1 bis 3, dadurch gekennzeichnet, daß der Anteil der Fettphase in der Emulsion 25 bis 50 Gew.-% der Emulsion beträgt.
5. Verfahren nach Anspruch 1 bis 4, dadurch gekennzeichnet, daß der Proteingehalt in der Fettphase im Bereich von 0,5 bis 60 Gew.-% liegt.
6. Verfahren nach Anspruch 5, dadurch gekennzeichnet, daß der Proteingehalt in der Emulsion 5 bis 15 Gew.-% beträgt.
7. Verfahren nach Anspruch 1 bis 6, dadurch gekennzeichnet, daß man in Stufe b) des Verfahrens zunächst die Fett-Protein-Dispersion in die wässrige Phase einbringt, für 5 bis 30 Minuten stark rührt, anschließend den Emulgator zugibt und für weitere 5 bis 30 Minuten stark rührt.

## Claims

1. A process for the production of a low-calorie spread of the water-in-oil emulsion type with a high protein content, by separate production of an aqueous phase and of a fatty phase consisting of oils and/or fats and possibly further usual additives, characterised in that
a. protein(s) is(are) dispersed in a fatty phase heated to 35 to 80°C;
b. this fat-protein dispersion is stirred, emulsified in an aqueous phase heated to 55 to 80°C;
c. the emulsifier is added and stirring is again effected at 50 to 80°C, the emulsion is pasteurized by methods know per se and cooled in a manner known per se in a scraped film cooler after a pasteurizing step at 75°C to 85°C.
2. A process according to claim 1, characterised in that the temperature
in step a) is 60–70°C,
in step b) is 65–70°C,
in step c) is 65–70°C and
the end temperature is 5–15°C.
3. A process according to claims 1 to 2, characterised in that the protein used for the dispersion is buttermilk powder and/or caseinates or casein and/or whey proteins or mixtures thereof.
4. A process according to claims 1 to 3, characterised in that the proportion of the fatty phase in the emulsion is 25 to 50 % by weight of the emulsion.
5. A process according to claims 1 to 4, characterised in that the protein content in the fatty phase is in the range from 0.5 to 60 % by weight.
6. A process according to claim 5, characterised in that the protein content in the emulsion is 5 to 15 % by weight.
7. A process according to claims 1 to 6, characterised in that in step b) of the process, the fat-protein dispersion is first introduced into the aqueous phase, vigorous stirring is effected for 5 to 30 minutes, then the emulsifier is added and vigorous stirring is effected for a further 5 to 30 minutes.

## Revendications

1. Procédé de fabrication d'une masse d'enduction pauvre en calories, du type d'émulsion eau-dans-l'huile, à teneur élevée en protéines, par fabrication séparée d'une phase aqueuse et d'une phase grasse consistant en des huiles et/ou des graisses et éventuellement en d'autres additifs courants, caractérisé en ce que
a) on disperse dans une phase grasse chauffée à 35–80°C une (ou des) protéine(s);
b) on émulsifie cette dispersion graisse-protéine dans une phase aqueuse chauffée à 55 à 80°C, avec agitation,

c) on ajoute l'émulsifiant et l'on agite encore une fois à 50 à 80°C, on pasteurise l'émulsion par des procédés connus en eux-mêmes et l'on refroidit de la manière connue en elle-même dans un refroidisseur à grattoir après un stade de pasteurisation à 75 à 85°C.

2. Procédé selon la revendication 1, caractérisé en ce que la température s'élève
au stade a) à 60–70°C,
au stade b) à 65–70°C,
au stade c) à 65–70°C et
la température finale à 5–15°C.

3. Procédé selon les revendications 1 et 2, caractérisé en ce que la protéine employée pour la dispersion est du babeurre en poudre et/ou des caséinates ou de la caséine et/ou des protéines de petit lait ainsi que leurs mélanges.

4. Procédé selon les revendications 1 à 3, caractérisé en ce que la proportion de phase grasse dans l'émulsion s'élève à 25–50 % en poids de l'émulsion.

5. Procédé selon les revendications 1 à 4, caractérisé en ce que la teneur en protéine dans la phase grasse se situe dans l'intervalle de 0,5 à 60 % en poids.

6. Procédé selon la revendication 5, caractérisé en ce que la teneur en protéine dans l'émulsion s'élève à 5–15 % en poids.

7. Procédé selon les revendications 1 à 6, caractérisé en ce que dans le stade b) du procédé on introduit tout d'abord la dispersion graisse-protéine dans la phase aqueuse, on agite fortement pendant 5 à 30 minutes, on ajoute ensuite l'émulsifiant et l'on agite fortement pendant 5 à 30 minutes supplémentaires.